# EUROPEAN PATENT APPLICATION

(11) **EP 4 645 580 A1**
(43) Date of publication of application: **05.11.2025**
(21) Application number: 23912098.3
(22) Date of filing: 26.12.2023
(51) Int. Cl.: H01M 50/578, H01M 50/509, H01M 50/55, H01M 50/559, H01M 50/572, H01M 50/588, H01M 50/591

(54) **POWER STORAGE DEVICE AND POWER STORAGE MODULE**

(30) Priority: 27.12.2022 JP 2022210698; 27.12.2022 JP 2022210336; 27.12.2022 JP 2022210963
(71) Applicant: Panasonic Intellectual Property Management Co., Ltd., Kadoma-shi, Osaka 571-0057 (JP)
(72) Inventor: SAKAMOTO, Shinichi, Kadoma-shi, Osaka 571-0057 (JP); GESHI, Shinya, Kadoma-shi, Osaka 571-0057 (JP)
(74) Representative: Eisenführ Speiser
(86) International application number: PCT/JP2023/046550
(87) International publication number: WO 2024/143319

(57) **Abstract**

A power storage device (10) comprises: an electrode body (14) including a positive electrode (11) and a negative electrode (12); an outer can (20) that accommodates the electrode body (14) and is electrically connected to the negative electrode (12); a positive electrode cap (31) that blocks an opening formed on one axial side of the outer can (20) and that is electrically connected to the positive electrode (11); and a negative electrode cap (21) that is provided on one axial side of the outer can (20) and is electrically connected to the outer can (20), the negative electrode cap (21) having a safety device to which a convex portion (21C) is provided.

## Description

### TECHNICAL FIELD

The present disclosure relates to a power storage device and a power storage module.

### BACKGROUND ART

Along with the widespread use of electric vehicles, large-scale power storage systems and the like, power storage modules with large battery capacities and low resistances have become widely used. The power storage module includes a plurality of power storage devices that are connected in parallel and in series.

In case one of power storage devices in the power storage module causes an electrical short-circuit abnormality due to internal short-circuit or the like, current may flow from another adjacent power storage device connected in parallel to the short-circuited power storage device into this short-circuited power storage device, and the amount of heat generation of the short-circuited power storage device may increase. Accordingly, some safety measures are required to be taken.

For example, Patent Literature 1 discloses a technique that disposes a spring at a terminal portion of a battery sealing assembly, fixes a distal end portion of the spring, in a deformed state, to the sealing assembly with adhesive, fuses the adhesive on the spring distal end portion by the heat in case of a battery abnormality, releases the pressure of the spring, brings the spring distal end portion into contact with a can potential component disposed at a battery swaging portion to thereby short-circuit the sealing assembly to the can, and prevents current from flowing into an electrode group (wound body).

### CITATION LIST

### PATENT LITERATURE

PATENT LITERATURE 1: Japanese Patent Publication No. 3232767

### SUMMARY

The electric vehicles, the large-scale power storage systems and the like described above are systems that are used for a long time period that is longer than or equal to one or two decades. On the other hand, in the technique disclosed in Patent Literature 1, the fixing force of the adhesive for deforming the spring for a long time period in the battery is required. However, there is a concern about selection of the adhesive that can withstand chemical reactions in the battery for a long time period, occurrence of creep in the spring and the like, and there is room for improvement in view of improvement in safety.

Accordingly, it is an advantage of the present disclosure to provide a power storage device and a power storage module that can improve the safety.

A power storage device according to the present disclosure comprises: an electrode assembly that includes a first electrode and a second electrode; an outer can that accommodates the electrode assembly, and is electrically connected to the second electrode; a first terminal that blocks an opening formed on one side of the outer can in an axial direction, and is electrically connected to the first electrode; and a second terminal that is provided on the one side of the outer can in the axial direction, and is electrically connected to the outer can, characterized in that the second terminal includes a safety device made up of a projection.

According to the power storage device and the power storage module in the present disclosure, the safety may be improved.

### BRIEF DESCRIPTION OF DRAWING

FIG. 1 is a circuit diagram showing a power storage module according to an embodiment.
FIG. 2 is a schematic sectional view showing a power storage device of a first embodiment.
FIG. 3 is a schematic sectional view showing an external insulating mechanism in the first embodiment.
FIG. 4 is a schematic sectional view showing a state in which the external insulating mechanism is activated.
FIG. 5 is a schematic sectional view showing an external insulating mechanism in another example of the first embodiment.
FIG. 6 is a schematic sectional view showing a state in which the external insulating mechanism is activated.
FIG. 7 is a schematic sectional view showing an external insulating mechanism of a power storage device of a second embodiment.
FIG. 8 is a schematic sectional view showing a power storage device of a third embodiment.
FIG. 9 is a schematic sectional view showing an external short-circuit mechanism in the third embodiment.
FIG. 10 is a schematic sectional view showing a state in which the external short-circuit mechanism is activated.
FIG. 11 is a schematic sectional view showing a power storage device of a fourth embodiment.
FIG. 12 is a schematic sectional view showing an external short-circuit mechanism in the fourth embodiment.
FIG. 13 is a schematic sectional view showing a state in which the external short-circuit mechanism is activated.
FIG. 14 is a schematic sectional view showing an external short-circuit mechanism of a power storage device of a fifth embodiment.

### DESCRIPTION OF EMBODIMENTS

An example of an embodiment of the present disclosure is described in detail below. In the following description, specific shapes, materials, directions, numerical values and the like are examples to facilitate understanding of the present disclosure, and can be changed as appropriate depending on the application, purpose, specifications and the like.

### [Power Storage Module]

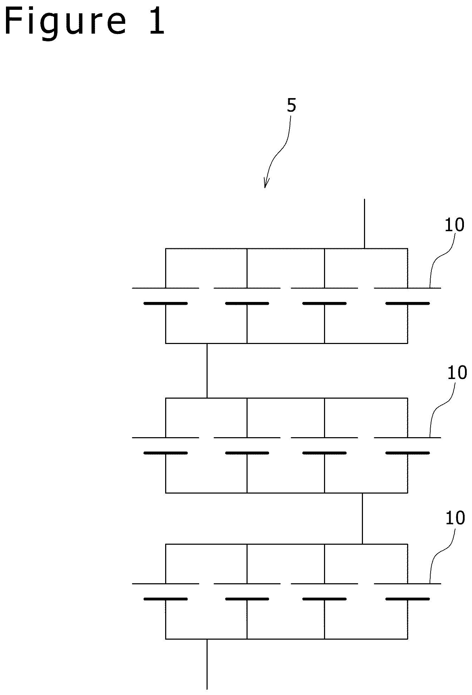

Referring to FIG. 1, a power storage module 5 according to an embodiment is described.

The power storage module 5 is used as, for example, a power source of an electric vehicle. However, the power storage module in the present disclosure is not limited to the power source of an electric vehicle, and may be used as, for example, a power source of motor-driven electric equipment, such as an electric tool, an electric-assisted bicycle, an electric motorcycle, an electric wheelchair, an electric tricycle, an electric cart or the like. The power storage module in the present disclosure may be used as, for example, a power source for various types of electric equipment that are used indoors and outdoors, such as a cleaner, a radio, a lighting device, a digital camera, a video camera or the like.

The power storage module 5 has a configuration in which a plurality of power storage devices 10 are connected in parallel and in series. In the power storage module 5 of the present embodiment, four power storage devices 10 are connected in parallel and form one block, and three blocks are connected in series. However, the power storage module in the present disclosure is not limited to the combination of the power storage devices 10 in the present embodiment. The details of the power storage device 10 are described later.

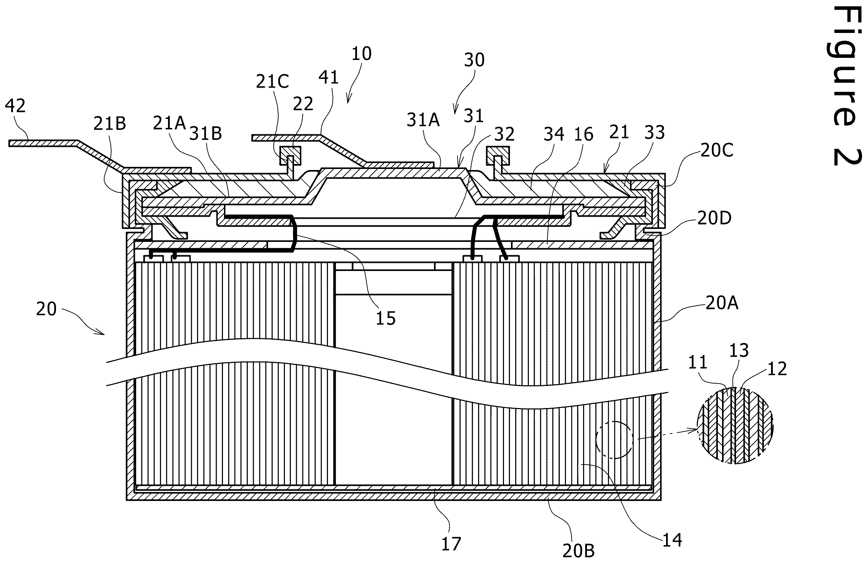

The power storage module 5 includes: a positive electrode current collector plate 41 connected to a positive electrode cap 31 serving as an external positive electrode terminal of each power storage device 10 described later; a negative electrode current collector plate 42 connected to a negative electrode cap 21 serving as an external negative electrode terminal of each power storage device 10 described later; and a base member 43 provided above a positive electrode current collector plate 41. (see FIGS. 2 to 6).

### [First Embodiment]

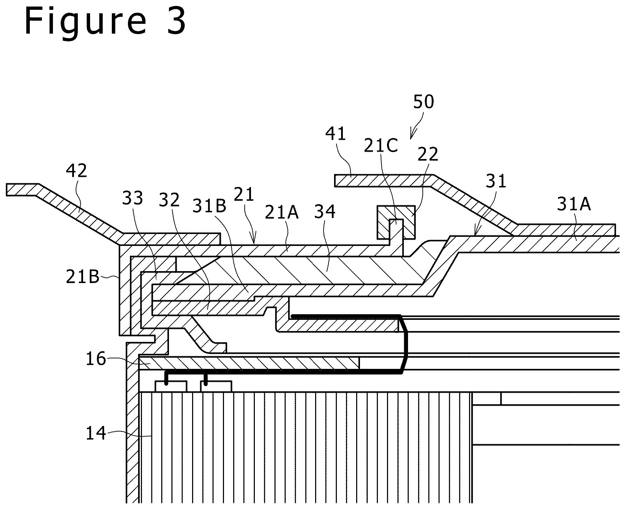

Referring to FIGS. 2 and 3, a power storage device 10 of a first embodiment is described.

The power storage device 10 includes: a wound-type electrode assembly 14 where a positive electrode 11 as a first electrode, and a negative electrode 12 as a second electrode are wound together, separated by a separator 13; an outer can 20 that accommodates the electrode assembly 14; and a sealing assembly 30 that blocks an opening of the outer can 20. The outer can 20 houses electrolytic solution along with the electrode assembly 14. The electrolytic solution in the present embodiment is non-aqueous electrolytic solution, but may be aqueous electrolytic solution. In the following, for convenience of description, it is assumed that a side on which the sealing assembly 30 of the power storage device 10 is provided is an upper side, and a side on which a bottom portion 20B of the outer can 20 is formed is a lower side.

The positive electrode 11, the negative electrode 12, and the separator 13 are strip-shaped elongated bodies, and are spirally wound, thus being alternately stacked in the radial direction of the electrode assembly 14. The composite layer of the negative electrode 12 may be formed to have a dimension one size larger than the composite layer of the positive electrode 11 in order to prevent lithium from depositing. That is, the composite layer of the negative electrode 12 may be formed longer than the composite layer of the positive electrode 11 in the longitudinal direction and the width direction (transverse direction). The separator 13 is formed to have a dimension at least one size larger than the positive electrode 11. For example, two separators 13 are disposed so as to sandwich the positive electrode 11.

The positive electrode 11 includes a positive electrode core body, and a positive electrode composite agent layer formed on at least one surface of the core body. The positive electrode core body may be made of, for example, metal foil that is stable in the potential range of the positive electrode 11, such as of aluminum or an aluminum alloy, a film on which the metal is disposed as the surface layer, or the like. Preferably, the positive electrode composite agent layer contains, for example: a positive-electrode active material; a conductive agent, such as acetylene black; and a binding agent, such as polyvinylidene fluoride, and is formed on each of the opposite surfaces of the positive electrode core body. For example, lithium transition metal composite oxide is used as the positive-electrode active material.

The negative electrode 12 includes a negative electrode core body, and a negative electrode composite agent layer formed on at least one surface of the core body. The negative electrode core body may be made of, for example, metal foil that is stable in the potential range of the negative electrode 12, such as of copper or a copper alloy, a film on which the metal is disposed as the surface layer, or the like. Preferably, the negative electrode composite agent layer contains, for example, a negative-electrode active material, and a binding agent such as styrene-butadiene rubber (SBR), and is formed on each of the opposite surfaces of the negative electrode core body. For example, graphite, a silicon-containing compound or the like is used as the negative-electrode active material. Preferably, the negative electrode lead is directly connected to the negative electrode core body by welding or the like.

The non-aqueous electrolyte housed in the outer can 20 contains a non-aqueous solvent, and electrolyte salt dissolved in the non-aqueous solvent. The non-aqueous solvent may be, for example, any of esters, ethers, nitriles, or amides, a composite solvent of two or more of them, and the like. The non-aqueous solvent may contain a halogenated compound made by replacing at least some of hydrogen atoms of the solvent with halogen atoms, such as fluorine. Examples of the non-aqueous solvent include ethylene carbonate (EC), ethyl methyl carbonate (EMC), dimethyl carbonate (DMC), a mixed solvent of them and the like. The electrolyte salt may be, for example, lithium salt, such as LiPF6. Note that the non-aqueous electrolyte may be gel electrolyte, solid electrolyte or the like instead of the electrolytic solution.

A positive electrode lead 15 that extends from the upper end of the electrode assembly 14 in the axial direction, and directly connects the positive electrode 11 included in the electrode assembly 14 and the current collector plate 32 of the sealing assembly 30 to each other, and an upper insulating plate 16 disposed between the electrode assembly 14 and the sealing assembly 30 are provided above the electrode assembly 14. Since the positive electrode lead 15 electrically connects the positive electrode 11 and the sealing assembly 30 to each other, the positive electrode cap 31 of the sealing assembly 30 functions as a positive electrode external terminal as a first external terminal. The upper insulating plate 16 prevents the positive electrode 11 and the positive electrode lead 15 from coming into contact with the outer can 20, and also prevents the positive electrode lead 15 from coming into contact with the negative electrode 12 of the electrode assembly 14.

A negative electrode lead that extends from the lower end of the electrode assembly 14 in the axial direction, and directly connects the negative electrode 12 included in the electrode assembly 14 and the bottom portion 20B of the outer can 20 to each other, and a lower insulating plate 17 disposed between the electrode assembly 14 and the bottom portion 20B of the outer can 20 are provided below the electrode assembly 14. Since the negative electrode lead electrically connects the negative electrode 12 and the outer can 20 to each other, and the outer can 20 is electrically connected to the negative electrode cap 21 described later, the negative electrode cap 21 functions as a negative electrode external terminal serving as a second external terminal.

The outer can 20 is a metal container that has a closed-bottom cylindrical shape with one end (upper end) in the axial direction being open. The outer can 20 is typically made of metal, with iron as the principal component, but may be made of metal, with aluminum or the like as the principal component, in a case where the positive electrode 11 is connected. The outer can 20 includes: a cylindrical portion 20A that is formed to have a cylindrical shape; a bottom portion 20B that has a circular shape in bottom view; a shoulder portion 20C that is formed to have a ring shape along the circumferential direction of the outer can 20 at the opening end of the cylindrical portion 20A; and a grooved portion 20D that is formed along the circumferential direction of the cylindrical portion 20A. The outer can 20 is provided with a negative electrode cap 21 serving as a second terminal.

The grooved portion 20D is formed adjacent to the opening of the outer can 20 at a position apart from the shoulder portion 20C by a predetermined length. The grooved portion 20D is a portion that is part of the cylindrical portion 20A projecting to the inside of the outer can 20, and is formed by applying a spinning process to the cylindrical portion 20A from the outside, for example. Note that at the position where the grooved portion 20D is formed, the outer can 20 has a reduced diameter, and a narrow-lined groove is formed in the outer-peripheral surface of the cylindrical portion 20A. Preferably, the grooved portion 20D has a substantially U-shaped section, and is formed to have a ring shape over the entire length in the circumferential direction of the cylindrical portion 20A.

The negative electrode cap 21 as the second terminal is connected to the negative electrode 12 via the outer can 20, and functions as a negative electrode external terminal. The negative electrode cap 21 is formed to have a ring shape in plan view (viewed from the axial direction), and to have an L-shaped section viewed from the circumferential direction. Note that the negative electrode cap 21 may have a partially missing shape, such as a C-shape, in plan view. The negative electrode cap 21 includes: an end wall 21A that faces the outer can 20 in the height direction (axial direction), and is in contact with an upper end surface of the shoulder portion 20C of the outer can 20; a side wall 21B that faces the outer can 20 in the radial direction, and is in contact with the upper end portion of the cylindrical portion 20A of the outer can 20; and a projection 21C that is formed to project upward at an inner peripheral end portion of the side wall 21B in the radial direction. Note that both the end wall 21A and the side wall 21B are not necessarily in contact with the outer can 20. The negative electrode cap 21 is welded to the cylindrical portion 20A of the outer can 20 at the predetermined position on the side wall 21B of the negative electrode cap 21, and is electrically connected to the outer can 20. Although the details are described later, the end wall 21A is joined by welding to the negative electrode current collector plate 42, and the negative electrode cap 21 and the negative electrode current collector plate 42 are electrically connected to each other.

The projection 21C of the negative electrode cap 21 constitutes an external insulating mechanism 50, which is described later in detail. The projection 21C is formed by bending the inner peripheral end portion of the end wall 21A of the negative electrode cap 21 upward. The projection 21C is formed to have a ring shape in plan view (viewed from the axial direction). The projection 21C is formed by applying a burring process to the inner peripheral end portion of the end wall 21A. The burring process is a type of a forming process method, and is a process of forming a hole in a plate and cylindrically extending the edge portion of the hole. The projection 21C of the negative electrode cap 21 is provided with an insulating member 22.

Note that the projection 21C is not necessarily at the inner peripheral end portion of the end wall 21A of the negative electrode cap 21. It may be only required to be inside the outer end of the outer can 20 at least at the end wall 21A of the negative electrode cap 21 in the radial direction of the power storage device 10. Consequently, it may be outside the inner peripheral end portion of the end wall 21A of the negative electrode cap 21. In this case, part of the end wall 21A where the projection 21C is formed may be formed as a thick wall, or have a caret shape, such as a V-shaped, C-shaped, or U-shaped section, protruding from the lower surface (the surface facing the outer can) of the end wall 21A to its upper surface (the surface on the outer side of the power storage device) formed by bending the plate-shaped end wall 21A. According to this configuration, the entire stiffness of the negative electrode cap 21 can be improved in comparison with the projection 21C at the inner peripheral end portion.

Furthermore, in particular, in a case where the negative electrode cap 21 is a metal plate with plated surfaces, the inner peripheral end portion in the radial direction and the like are not covered by plating in some cases, and the unplated inner peripheral end portion is prone to rust. Accordingly, by disposing the projection 21C outside the inner peripheral end portion, a plated rust-resistant area of the end wall 21A can be used as the projection 21C. Consequently, the insulating member 22 is prevented from breaking due to rust.

The projection 21C does not necessarily have a ring shape, and may be intermittently provided in the circumferential direction of the end wall 21A. Furthermore, in the circumferential direction of the end wall 21A, only one projection 21C may be provided. The caret-shaped projection 21C may be provided at the inner peripheral end portion of the end wall 21A. The upper end of the projection 21C along with the insulating member 22 may be positioned above the upper end of the positive electrode cap 31.

The insulating member 22 is a rubber member or a plastic member for preventing the projection 21C of the negative electrode cap 21 and the positive electrode current collector plate 41 from coming into contact, and securing electric insulation between the negative electrode cap 21 and the positive electrode current collector plate 41. Preferably, the insulating member 22 is a member that has heat resistance and is not fused even in case the power storage device 10 generates heat.

The sealing assembly 30 is formed to have a disk shape as a whole, and includes the positive electrode cap 31, a current collector plate 32, a gasket 33, and an insulating member 34. The sealing assembly 30 is disposed above the grooved portion 20D of the outer can 20, and is fixed to the upper end portion of the outer can 20. In more detail, the shoulder portion 20C of the outer can 20 is bent inward in the radial direction and swagged to the sealing assembly 30, the sealing assembly 30 is fixed to the upper end portion of the outer can 20 by the shoulder portion 20C and the grooved portion 20D of the outer can 20, and the sealing assembly 30 blocks the opening of the outer can 20.

The positive electrode cap 31 is connected to the positive electrode 11 via the positive electrode lead 15 and the current collector plate 32, and functions as a positive electrode external terminal. The positive electrode cap 31 is a disk-shaped metal member, and includes: an elevated portion 31A whose center portion in the radial direction protrudes to the outside of the power storage device 10; and a flange portion 31B formed around the elevated portion 31A. The positive electrode cap 31 is disposed on the upper surface side of the sealing assembly 30, and is exposed outside the outer can 20, thus forming a top surface of the power storage device 10. Although the details are described later, the positive electrode current collector plate 41 is joined by welding to the elevated portion 31A, and is electrically connected to the positive electrode current collector plate 41.

The current collector plate 32 is connected to the positive electrode 11 via the positive electrode lead 15, and functions as a positive electrode current collector plate. The current collector plate 32 is a metal member that has a diameter comparable to that of the positive electrode cap 31. The current collector plate 32 is formed to have a ring shape that has an opening at a center portion in the radial direction. The current collector plate 32 is disposed closer to the electrode assembly 14 than the positive electrode cap 31. The current collector plate 32 is welded to the positive electrode cap 31, and is thus welded, for example, at a position closer to the outer peripheral edge of the positive electrode cap 31 than its center in the radial direction.

The gasket 33 is a rubber member or a plastic member that prevents the positive electrode cap 31 and the current collector plate 32 from coming into contact with the outer can 20, and secures electrical insulation between the outer can 20 and the sealing assembly 30. The gasket 33 blocks the gap between the outer can 20 and the sealing assembly 30, and seals the inside of the power storage device 10. The gasket 33 is provided between the outer peripheral portion of the stacked body of the positive electrode cap 31 and the current collector plate 32, and the outer can 20. The gasket 33 covers the upper surface of the flange portion 31B of the positive electrode cap 31, the side surfaces of the positive electrode cap 31 and the current collector plate 32, and the lower surface of the current collector plate 32, at the outer peripheral portion of the stacked body.

The insulating member 34 is a rubber member or a plastic member for preventing contact between the positive electrode cap 31 and the negative electrode cap 21, and securing electric insulation between the positive electrode cap 31 and the negative electrode cap 21. The insulating member 34 is formed to have a ring shape that has an opening at a center portion in the radial direction. The insulating member 34 is disposed between the upper surface of the flange portion 31B of the positive electrode cap 31 and the lower surface of the end wall 21A of the negative electrode cap 21. Viewed from the axial direction, the insulating member 34 is disposed between the elevated portion 31A of the positive electrode cap 31 and the shoulder portion 20C of the outer can 20.

As described above, the positive electrode current collector plate 41 is joined by welding to the elevated portion 31A of the positive electrode cap 31. Accordingly, the positive electrode current collector plate 41 is electrically connected to the positive electrode cap 31. The positive electrode current collector plate 41 is a strip-like metal member with conductivity, and is provided above the positive electrode cap 31.

The negative electrode current collector plate 42 is joined by welding to the end wall 21A of the negative electrode cap 21. Accordingly, the negative electrode current collector plate 42 is electrically connected to the negative electrode cap 21. The negative electrode current collector plate 42 is a strip-like metal member with conductivity, and is provided above the negative electrode cap 21.

### [External Insulating Mechanism (External Current Blocking Mechanism)]

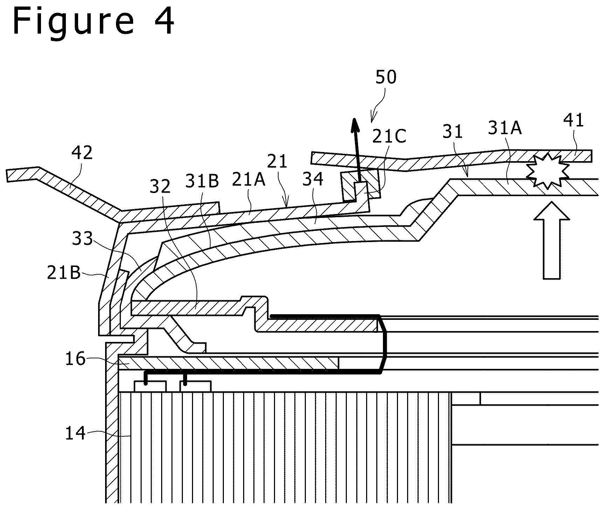

Referring to FIGS. 3 and 4, the external insulating mechanism 50 (current blocking mechanism) in the first embodiment is described.

The external insulating mechanism 50 is a mechanism that insulates the positive electrode current collector plate 41 and the power storage device 10 from each other outside the outer can 20 when the internal pressure of the power storage device 10 increases in case of an abnormality of the power storage device 10. Although the details are described later, by the external insulating mechanism 50, the safety of the power storage module 5 can be improved.

As shown in FIG. 3, the external insulating mechanism 50 includes the projection 21C of the negative electrode cap 21, the insulating member 22, and the positive electrode current collector plate 41. That is, the external insulating mechanism 50 is configured to be outside the outer can 20. Accordingly, when the positive electrode current collector plate 41 and the power storage device 10 are insulated from each other by the external insulating mechanism 50, the effect of the insulation on the inside of the power storage device 10 can be mitigated.

As shown in FIG. 4, when the internal pressure of the power storage device 10 increases in case of an abnormality of the power storage device 10, the outer can 20 is expanded, and the negative electrode cap 21 is deformed upward. In this case, by the insulating member 22, the positive electrode current collector plate 41 is elevated upward, the welded portion between the positive electrode cap 31 and the positive electrode current collector plate 41 is broken, the positive electrode cap 31 and the positive electrode current collector plate 41 are electrically insulated from each other, and the power storage device 10 is insulated from the power storage module 5.

By the external insulating mechanism 50, the safety of the power storage module 5 can be improved. In more detail, by the external insulating mechanism 50, the power storage device 10 is insulated outside the outer can 20. The power storage device 10 can thus be insulated while mitigating the effect on the inside of the power storage device 10. Accordingly, the power storage device 10 with an abnormality can be electrically isolated from the power storage module 5, which can prevent current from flowing into the power storage device 10 with the abnormality, and prevent the amount of heat generation from increasing. Although the output of the power storage module 5 decreases, a system connected to the power storage module 5 can be measured and operated.

By the external insulating mechanism 50, the insulation mechanism can be achieved only by forming the projection 21C of the negative electrode cap 21, without using adhesive or a complicated mechanism, such as of a spring, in the power storage device 10.

Furthermore, by the external insulating mechanism 50, the insulation mechanism can be achieved without separately providing any member on the conductive path from the positive electrode 11 to the positive electrode cap 31 or the conductive path from the negative electrode 12 to the negative electrode cap 21. Accordingly, the insulation path can be achieved while maintaining the power storage device 10 at a low resistance.

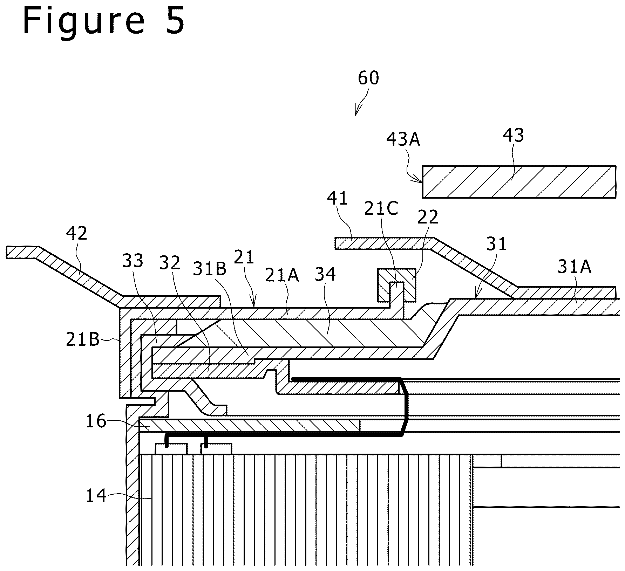

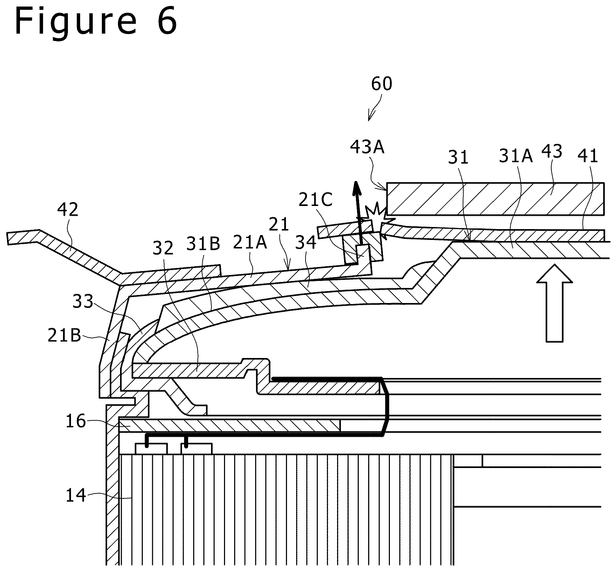

Referring to FIGS. 5 and 6, an external insulating mechanism 60 that is another example of the first embodiment is described. In the following, configurations different from those of the power storage device 10 and the external insulating mechanism 50 described above are described, and the description of configurations and advantageous effects similar to those of the power storage device 10 and the external insulating mechanism 50 described above is omitted.

As shown in FIG. 5, the external insulating mechanism 60 includes: the projection 21C of the negative electrode cap 21; the insulating member 22; the positive electrode current collector plate 41; and the base member 43 provided above the positive electrode current collector plate 41. That is, the external insulating mechanism 60 is configured to be outside the outer can 20. Accordingly, when the positive electrode current collector plate 41 and the power storage device 10 are insulated from each other (current blocking) by the external insulating mechanism 60, the potential and electrolyte in the power storage device 10 are hardly affected by the insulation.

The base member 43 includes an end surface 43A closer to the negative electrode cap 21. The base member 43 is provided at a position that allows the insulating member 22 to slide to the end surface 43A when the outer can 20 is expanded and the negative electrode cap 21 is deformed upward. The base member 43 in the present embodiment is provided at, for example, a bottom surface portion of an exhaust duct. The exhaust duct is formed on an upper side of the inside of a case for accommodating each power storage device 10 of the power storage module 5, communicates with the outside of the case, and exhausts gas in the power storage device 10 to the outside of the case 40 in case of an abnormality of the power storage device 10. Note that the base member in the present disclosure is not limited to the base member 43 in the present embodiment, and may be provided on an upper side of the inside of the case 40.

As shown in FIG. 6, when the internal pressure of the power storage device 10 increases in case of an abnormality of the power storage device 10, the outer can 20 is expanded, and the negative electrode cap 21 is deformed upward. In this case, the positive electrode current collector plate 41 is pressed against the base member 43 by the insulating member 22, and the insulating member 22 slides on the end surface 43A of the base member 43, thereby breaking the positive electrode current collector plate 41. Accordingly, the positive electrode current collector plate 41 and the power storage device 10 are electrically insulated from each other, and the power storage device 10 is insulated from the power storage module 5.

### [Second Embodiment]

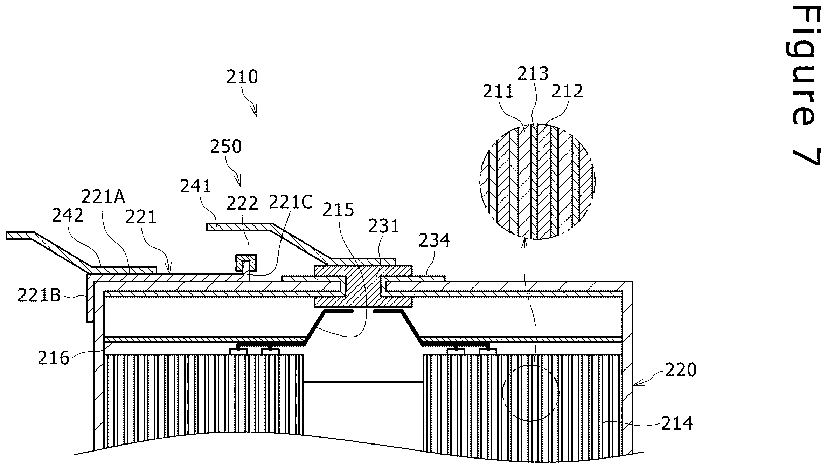

Referring to FIG. 7, an external insulating mechanism 250 of a power storage device 210 of a second embodiment is described. In the following, configurations different from those of the power storage device 10 and the external insulating mechanism 50 described above are described, and the description of configurations and advantageous effects similar to those of the power storage device 10 and the external insulating mechanism 50 described above is omitted.

The power storage device 210 includes: an electrode assembly 214 where a positive electrode 211 as a first polar plate and a negative electrode 212 as a second polar plate wound are wound with a strip-shaped separator 213 intervening therebetween; an electrolyte (not shown); an outer can 220 that houses the electrode assembly 214 and the electrolyte; and a negative electrode cap 221 as a second external terminal; and a rivet 231 as a first external terminal. Note that in the present embodiment, for example, the unillustrated other end of the outer can 220 is provided with an opening, and a lid for blocking the opening, and this opening are joined by welding to each other, thus sealing the opening. The lid and the negative electrode 212 of the electrode assembly 214 are connected to each other.

The rivet 231 is fixed to the opening formed in an upper end surface of the outer can 220 in the axial direction via an insulating plate 234. A positive electrode lead 215 that extends from the upper end of the electrode assembly 214 in the axial direction, and directly connects the positive electrode 211 included in the electrode assembly 214 and the rivet 231 to each other, and an upper insulating plate 216 disposed between the electrode assembly 214 and the rivet 231 are provided above the electrode assembly 214.

A positive electrode current collector plate 241 is joined by welding to the rivet 231. Accordingly, the positive electrode current collector plate 241 is electrically connected to the rivet 231. The negative electrode current collector plate 242 is joined by welding to an end wall 221A of the negative electrode cap 221.

The external insulating mechanism 250 includes a projection 221C of the negative electrode cap 221, an insulating member 222, and the positive electrode current collector plate 241. When the internal pressure of the power storage device 210 increases in case of an abnormality of the power storage device 210, the outer can 220 is expanded, and the negative electrode cap 221 is deformed upward in the axial direction. In this case, the projection 221C of the negative electrode cap 221 and an insulating member 222 elevate the positive electrode current collector plate 241 upward, a welded portion between the rivet 231 and the positive electrode current collector plate 241 is broken, the rivet 231 and the positive electrode current collector plate 241 are electrically insulated from each other and the power storage device 210 is insulated from the power storage module.

### [Third Embodiment]

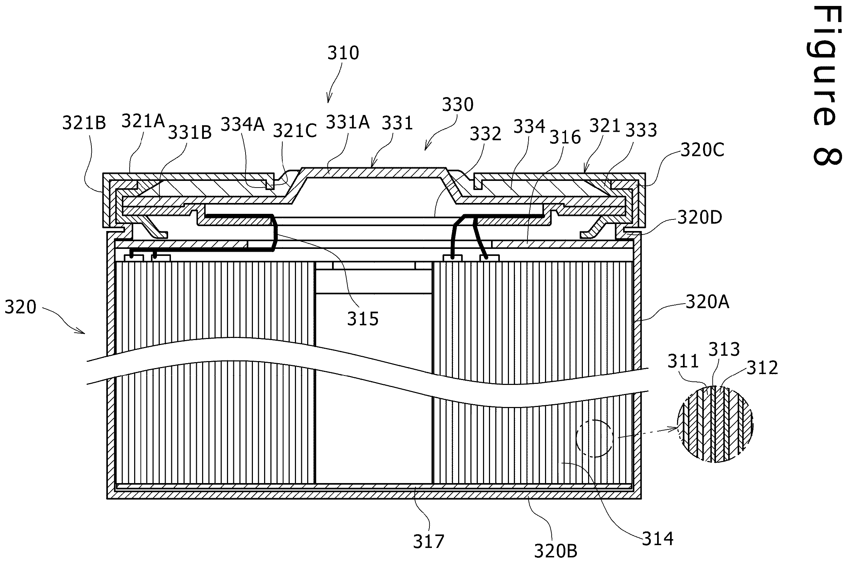

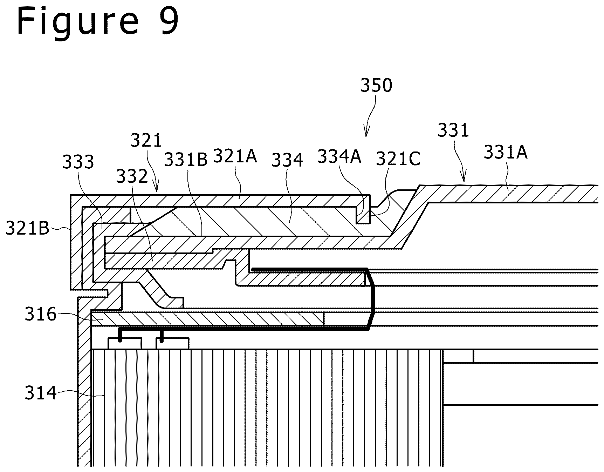

Referring to FIGS. 8 and 9, a power storage device 310 of a third embodiment is described.

The power storage device 310 includes: a wound-type electrode assembly 314 where a positive electrode 311 as a first electrode, and a negative electrode 312 as a second electrode are wound together, separated by a separator 313; an outer can 320 that accommodates the electrode assembly 314; and a sealing assembly 330 that blocks an opening of the outer can 320. The outer can 320 houses electrolytic solution along with the electrode assembly 314. The electrolytic solution in the present embodiment is non-aqueous electrolytic solution, but may be aqueous electrolytic solution. In the following, for convenience of description, it is assumed that a side on which the sealing assembly 330 of the power storage device 310 is provided is an upper side, and a side on which a bottom portion 320B of the outer can 320 is formed is a lower side.

The positive electrode 311, the negative electrode 312, and the separator 313 are strip-shaped elongated bodies, and are spirally wound, thus being alternately stacked in the radial direction of the electrode assembly 314. The composite layer of the negative electrode 312 may be formed to have a dimension one size larger than the composite layer of the positive electrode 311 in order to prevent lithium from depositing. That is, the composite layer of the negative electrode 312 may be formed longer than the composite layer of the positive electrode 311 in the longitudinal direction and the width direction (transverse direction). The separator 313 is formed to have a dimension at least one size larger than the positive electrode 311. For example, two separators 313 are disposed so as to sandwich the positive electrode 311.

The positive electrode 311 includes a positive electrode core body, and a positive electrode composite agent layer formed on at least one surface of the core body. The positive electrode core body may be made of, for example, metal foil that is stable in the potential range of the positive electrode 311, such as of aluminum or an aluminum alloy, a film on which the metal is disposed as the surface layer, or the like. Preferably, the positive electrode composite agent layer contains, for example: a positive-electrode active material; a conductive agent, such as acetylene black; and a binding agent, such as polyvinylidene fluoride, and is formed on each of the opposite surfaces of the positive electrode core body. For example, lithium transition metal composite oxide is used as the positive-electrode active material.

The negative electrode 312 includes a negative electrode core body, and a negative electrode composite agent layer formed on at least one surface of the core body. The negative electrode core body may be made of, for example, metal foil that is stable in the potential range of the negative electrode 312, such as of copper or a copper alloy, a film on which the metal is disposed as the surface layer, or the like. Preferably, the negative electrode composite agent layer contains, for example, a negative-electrode active material, and a binding agent such as styrene-butadiene rubber (SBR), and is formed on each of the opposite surfaces of the negative electrode core body. For example, graphite, a silicon-containing compound or the like is used as the negative-electrode active material. Preferably, the negative electrode lead is directly connected to the negative electrode core body by welding or the like.

The non-aqueous electrolyte housed in the outer can 320 contains a non-aqueous solvent, and electrolyte salt dissolved in the non-aqueous solvent. The non-aqueous solvent may be, for example, any of esters, ethers, nitriles, or amides, a composite solvent of two or more of them, and the like. The non-aqueous solvent may contain a halogenated compound made by replacing at least some of hydrogen atoms of the solvent with halogen atoms, such as fluorine. Examples of the non-aqueous solvent include ethylene carbonate (EC), ethyl methyl carbonate (EMC), dimethyl carbonate (DMC), a mixed solvent of them and the like. The electrolyte salt may be, for example, lithium salt, such as LiPF6. Note that the non-aqueous electrolyte may be gel electrolyte, solid electrolyte or the like instead of the electrolytic solution.

A positive electrode lead 315 that extends from the upper end of the electrode assembly 314 in the axial direction, and directly connects the positive electrode 311 included in the electrode assembly 314 and the current collector plate 332 of the sealing assembly 330 to each other, and an upper insulating plate 316 disposed between the electrode assembly 314 and the sealing assembly 330 are provided above the electrode assembly 314. Since the positive electrode lead 315 electrically connects the positive electrode 311 and the sealing assembly 330 to each other, the positive electrode cap 331 of the sealing assembly 330 functions as a positive electrode external terminal as a first external terminal. The upper insulating plate 316 prevents the positive electrode 311 and the positive electrode lead 315 from coming into contact with the outer can 320, and also prevents the positive electrode lead 315 from coming into contact with the negative electrode 312 of the electrode assembly 314.

A negative electrode lead that extends from the lower end of the electrode assembly 314 in the axial direction, and directly connects the negative electrode 312 included in the electrode assembly 314 and the bottom portion 320B of the outer can 320 to each other, and a lower insulating plate 317 disposed between the electrode assembly 314 and the bottom portion 320B of the outer can 320 are provided below the electrode assembly 314. Since the negative electrode lead electrically connects the negative electrode 312 and the outer can 320 to each other, and the outer can 320 is electrically connected to the negative electrode cap 321 described later, the negative electrode cap 321 functions as a negative electrode external terminal serving as a second external terminal.

The outer can 320 is a metal container that has a closed-bottom cylindrical shape with one end (upper end) in the axial direction being open. The outer can 320 is typically made of metal, with iron as the principal component, but may be made of metal, with aluminum or the like as the principal component, in a case where the positive electrode 311 is connected. The outer can 320 includes: a cylindrical portion 320A that is formed to have a cylindrical shape; the bottom portion 320B that has a circular shape in bottom view; a shoulder portion 320C that is formed to have a ring shape along the circumferential direction of the outer can 320 at the opening end of the cylindrical portion 320A; and a grooved portion 320D that is formed along the circumferential direction of the cylindrical portion 320A. The outer can 320 is provided with a negative electrode cap 321 serving as a second terminal.

The grooved portion 320D is formed adjacent to the opening of the outer can 320 at a position apart from the shoulder portion 320C by a predetermined length. The grooved portion 320D is a portion that is part of the cylindrical portion 320A projecting to the inside of the outer can 320, and is formed by applying a spinning process to the cylindrical portion 320A from the outside, for example. Note that at the position where the grooved portion 320D is formed, the outer can 320 has a reduced diameter, and a narrow-lined groove is formed in the outer-peripheral surface of the cylindrical portion 320A. Preferably, the grooved portion 320D has a substantially U-shaped section, and is formed to have a ring shape over the entire length in the circumferential direction of the cylindrical portion 320A.

The negative electrode cap 321 as the second terminal is connected to the negative electrode 312 via the outer can 320, and functions as a negative electrode external terminal. The negative electrode cap 321 is formed to have a ring shape in plan view (viewed from the axial direction), and to have an L-shaped section viewed from the circumferential direction. The negative electrode cap 321 includes: an end wall 321A that faces the outer can 320 in the height direction (axial direction), and is in contact with an upper end surface of the shoulder portion 320C of the outer can 320; a side wall 321B that faces the outer can 320 in the radial direction, and is in contact with the upper end portion of the cylindrical portion 320A of the outer can 320; and a projection 321C that is formed to project downward at an inner peripheral end portion of the end wall 321A in the radial direction. Note that both the end wall 321A and the side wall 321B are not necessarily in contact with the outer can 320. The negative electrode cap 321 is welded to the cylindrical portion 320A of the outer can 320 at the predetermined position on the side wall 321B of the negative electrode cap 321, and is electrically connected to the outer can 320.

The projection 321C of the negative electrode cap 321 constitutes an external short-circuit mechanism 350, which is described later in detail. The projection 321C is formed by bending the inner peripheral end portion of the end wall 321A of the negative electrode cap 321 downward. The projection 321C is formed to have a ring shape in plan view (viewed from the axial direction). The projection 321C is formed by applying a burring process to the inner peripheral end portion of the end wall 321A.

Note that the projection 321C is not necessarily at the inner peripheral end portion of the end wall 321A of the negative electrode cap 321. It may be only required to be inside the outer end of the outer can 320 at least at the end wall 321A of the negative electrode cap 321 in the radial direction of the power storage device 310. Consequently, it may be outside the inner peripheral end portion of the end wall 321A of the negative electrode cap 321. In this case, part of the end wall 321A where the projection 321C is formed may be formed as a thick wall, or have a caret shape, such as a V-shaped, C-shaped, or U-shaped section, protruding from the upper surface (the surface on the outer side of the power storage device) of the end wall 321A to its lower surface (the surface facing the outer can) formed by bending the plate-shaped end wall 321A. According to this configuration, the entire stiffness of the negative electrode cap 321 can be improved in comparison with the projection 321C at the inner peripheral end portion.

The projection 321C does not necessarily have a ring shape, and may be intermittently provided in the circumferential direction of the end wall 321A. Furthermore, in the circumferential direction of the end wall 321A, only one projection 321C may be provided. In the case where the projection 321C is intermittently provided, a through-hole may be formed in a top portion of the caret-shaped projection 321C. The caret-shaped projection 321C may be provided at the inner peripheral end portion of the end wall 321A.

The sealing assembly 330 is formed to have a disk shape as a whole, and includes a positive electrode cap 331, a current collector plate 332, a gasket 333, and an insulating member 334. The sealing assembly 330 is disposed above the grooved portion 320D of the outer can 320, and is fixed to the upper end portion of the outer can 320. In more detail, the shoulder portion 320C of the outer can 320 is bent inward in the radial direction and swagged to the sealing assembly 330, the sealing assembly 330 is fixed to the upper end portion of the outer can 320 by the shoulder portion 320C and the grooved portion 320D of the outer can 320, and the sealing assembly 330 blocks the opening of the outer can 320.

The positive electrode cap 331 is connected to the positive electrode 311 via the positive electrode lead 315 and the current collector plate 332, and functions as a positive electrode external terminal. The positive electrode cap 331 is a disk-shaped metal member, and includes: an elevated portion 31A whose center portion in the radial direction protrudes to the outside of the power storage device 310; and a flange portion 331B formed around the elevated portion 31A. The positive electrode cap 331 is disposed on the upper surface side of the sealing assembly 330, and is exposed outside the outer can 320, thus forming a top surface of the power storage device 310. The flange portion 331B constitutes an external short-circuit mechanism 350, which is described later in detail.

The current collector plate 332 is connected to the positive electrode 311 via the positive electrode lead 315, and functions as a positive electrode current collector plate. The current collector plate 332 is a metal member that has a diameter comparable to that of the positive electrode cap 331. The current collector plate 332 is formed to have a ring shape that has an opening at a center portion in the radial direction. The current collector plate 332 is disposed closer to the electrode assembly 314 than the positive electrode cap 331. The current collector plate 332 is welded to the positive electrode cap 331, and is thus welded, for example, at a position closer to the outer peripheral edge of the positive electrode cap 331 than its center in the radial direction.

The gasket 333 is a rubber member or a plastic member that prevents the positive electrode cap 331 and the current collector plate 332 from coming into contact with the outer can 320, and secures electrical insulation between the outer can 320 and the sealing assembly 330. The gasket 333 blocks the gap between the outer can 320 and the sealing assembly 330, and seals the inside of the power storage device 310. The gasket 333 is provided between the outer peripheral portion of the stacked body of the positive electrode cap 331 and the current collector plate 332, and the outer can 320. The gasket 333 covers the upper surface of the flange portion 331B of the positive electrode cap 331, the side surfaces of the positive electrode cap 331 and the current collector plate 332, and the lower surface of the current collector plate 332, at the outer peripheral portion of the stacked body.

The insulating member 334 is a rubber member or a plastic member for preventing contact between the positive electrode cap 331 and the negative electrode cap 321, and securing electric insulation between the positive electrode cap 331 and the negative electrode cap 321. The insulating member 334 is formed to have a ring shape that has an opening at a center portion in the radial direction. The insulating member 334 is disposed between the upper surface of the flange portion 331B of the positive electrode cap 331 and the lower surface of the end wall 321A of the negative electrode cap 321. Viewed from the axial direction, the insulating member 334 is disposed between the elevated portion 31A of the positive electrode cap 331 and the shoulder portion 320C of the outer can 320.

The insulating member 334 constitutes the external short-circuit mechanism 350, which is described later in detail. The insulating member 334 may be formed of a material that is fused at a predetermined temperature or higher. A depression 334A to which the projection 321C of the negative electrode cap 321 is fitted is formed on the upper surface of the insulating member 334. The depression 334A is formed to have a ring shape in plan view (viewed from the axial direction).

### [External Short-Circuit Mechanism]

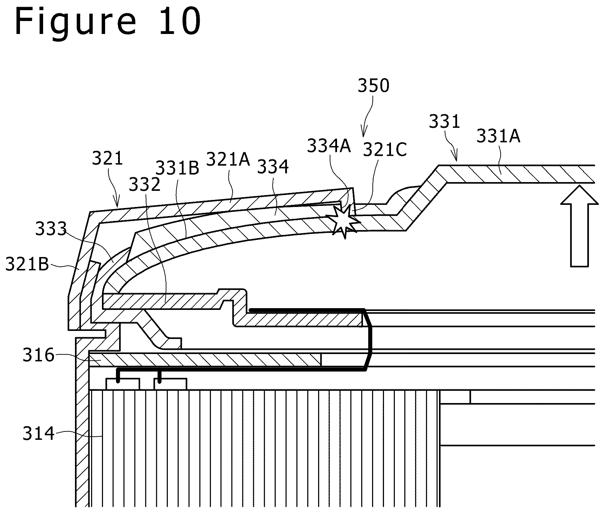

Referring to FIGS. 9 and 10, the external short-circuit mechanism 350 is described.

The external short-circuit mechanism 350 is a mechanism that short-circuits the power storage device 310 outside the outer can 320 by short-circuiting the positive electrode cap 331 and the negative electrode cap 321, when the power storage device 310 generates heat and the internal pressure of the power storage device 310 increases in case of an abnormality of the power storage device 310. Although the details are described later, by the external short-circuit mechanism 350, the safety of the power storage module 5 can be improved.

As shown in FIG. 9, the external short-circuit mechanism 350 includes the projection 321C of the negative electrode cap 321, the insulating member 334, and the flange portion 331B of the positive electrode cap 331. That is, the external short-circuit mechanism 350 is configured to be outside the outer can 320. Accordingly, when the power storage device 310 is short-circuited by the external short-circuit mechanism 350, the short circuit hardly affects the potential and electrolyte in the power storage device 310.

As shown in FIG. 10, when the power storage device 310 generates heat and the internal pressure of the power storage device 310 increases in case of an abnormality of the power storage device 310, the insulating member 334 is fused by heat generation of the power storage device 310, the increase in internal pressure of the power storage device 310 expands the outer can 320, and the positive electrode cap 331 is deformed upward in the axial direction. In this case, the projection 321C of the negative electrode cap 321 penetrates into the fused insulating member 334 beneath the depression 334A, comes into contact with the flange portion 331B of the positive electrode cap 331, and electrically connects the positive electrode cap 331 and the negative electrode cap 321 to each other, thus short-circuiting the power storage device 310. Note that the external short-circuit mechanism 350 does not require fusing of the insulating member 334, when it is activated. For example, through the force of expansion of the positive electrode cap 331, the insulating member 334 and the projection 321C may actively come into contact with each other, and the projection 321C may penetrate through the insulating member 334.

By the external short-circuit mechanism 350, the safety of the power storage module 5 can be improved. In more detail, by the external short-circuit mechanism 350, the power storage device 310 is short-circuited outside the outer can 320. Accordingly, the power storage device 310 can be short-circuited without being affected by the electrolytic solution and the potential of the power storage device 310. This can prevent current from flowing into the short-circuited power storage device 310 from another adjacent power storage device 310 connected in parallel to this short-circuited power storage device 310, and prevent the amount of heat generation of the short-circuited power storage device 310 from increasing.

Note that when the power storage device 310 is short-circuited by the external short-circuit mechanism 350 in case of an abnormality of the power storage device 310, a large current flows into a system to which the power storage module 5 is connected, and a fuse provided for the system is blown, thus preventing current from flowing into the short-circuited power storage device 310.

By the external short-circuit mechanism 350, the short-circuit mechanism can be achieved only by forming the projection 321C of the negative electrode cap 321, without using adhesive or a complicated mechanism, such as of a spring, in the power storage device 310.

Furthermore, by the external short-circuit mechanism 350, the short-circuit mechanism can be achieved without separately providing any member on the conductive path from the positive electrode 311 to the positive electrode cap 331 or the conductive path from the negative electrode 312 to the negative electrode cap 321. Accordingly, the short-circuit path can be achieved while maintaining the power storage device 310 at a low resistance.

### [Fourth Embodiment]

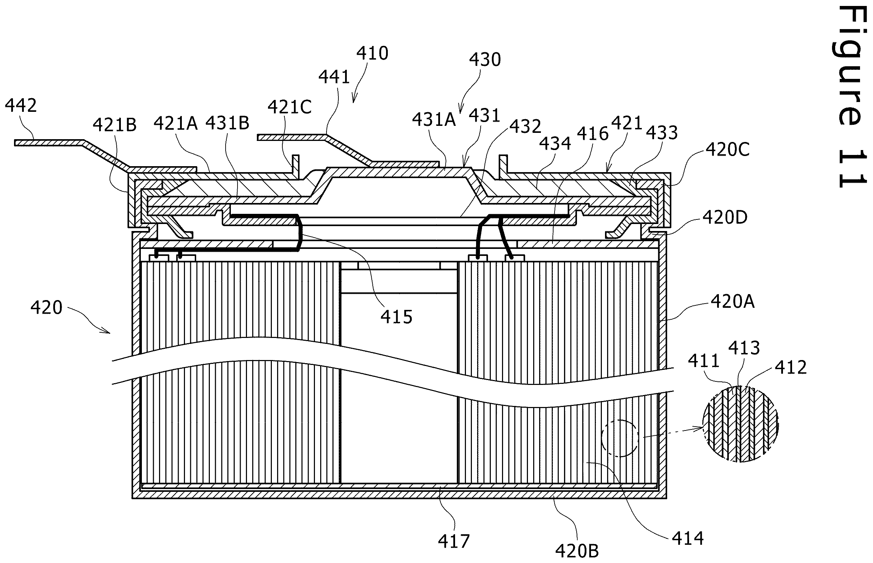

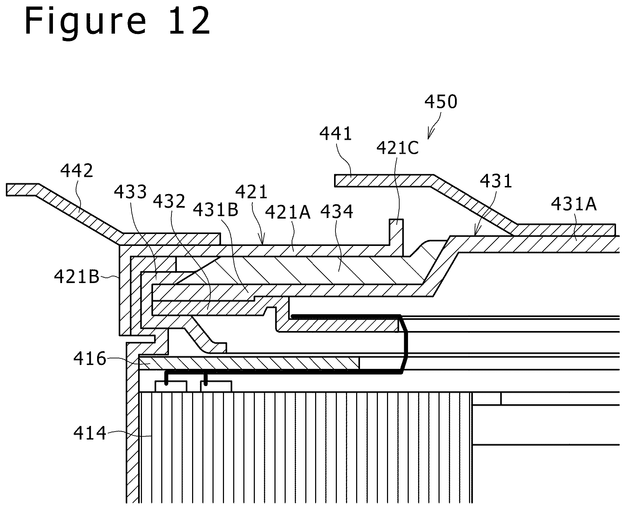

Referring to FIGS. 11 and 12, a power storage device 410 of a fourth embodiment is described.

The power storage device 410 includes: a wound-type electrode assembly 414 where a positive electrode 411 as a first electrode, and a negative electrode 412 as a second electrode are wound together, separated by a separator 413; an outer can 420 that accommodates the electrode assembly 414; and a sealing assembly 430 that blocks an opening of the outer can 420. The outer can 420 houses electrolytic solution along with the electrode assembly 414. The electrolytic solution in the present embodiment is non-aqueous electrolytic solution, but may be aqueous electrolytic solution. In the following, for convenience of description, it is assumed that a side on which the sealing assembly 430 of the power storage device 410 is provided is an upper side, and a side on which a bottom portion 420B of the outer can 420 is formed is a lower side.

The positive electrode 411, the negative electrode 412, and the separator 413 are strip-shaped elongated bodies, and are spirally wound, thus being alternately stacked in the radial direction of the electrode assembly 414. The composite layer of the negative electrode 412 may be formed to have a dimension one size larger than the composite layer of the positive electrode 411 in order to prevent lithium from depositing. That is, the composite layer of the negative electrode 412 may be formed longer than the composite layer of the positive electrode 411 in the longitudinal direction and the width direction (transverse direction). The separator 413 is formed to have a dimension at least one size larger than the positive electrode 411. For example, two separators 413 are disposed so as to sandwich the positive electrode 411.

The positive electrode 411 includes a positive electrode core body, and a positive electrode composite agent layer formed on at least one surface of the core body. The positive electrode core body may be made of, for example, metal foil that is stable in the potential range of the positive electrode 411, such as of aluminum or an aluminum alloy, a film on which the metal is disposed as the surface layer, or the like. Preferably, the positive electrode composite agent layer contains, for example: a positive-electrode active material; a conductive agent, such as acetylene black; and a binding agent, such as polyvinylidene fluoride, and is formed on each of the opposite surfaces of the positive electrode core body. For example, lithium transition metal composite oxide is used as the positive-electrode active material.

The negative electrode 412 includes a negative electrode core body, and a negative electrode composite agent layer formed on at least one surface of the core body. The negative electrode core body may be made of, for example, metal foil that is stable in the potential range of the negative electrode 412, such as of copper or a copper alloy, a film on which the metal is disposed as the surface layer, or the like. Preferably, the negative electrode composite agent layer contains, for example, a negative-electrode active material, and a binding agent such as styrene-butadiene rubber (SBR), and is formed on each of the opposite surfaces of the negative electrode core body. For example, graphite, a silicon-containing compound or the like is used as the negative-electrode active material. Preferably, the negative electrode lead is directly connected to the negative electrode core body by welding or the like.

The non-aqueous electrolyte housed in the outer can 420 contains a non-aqueous solvent, and electrolyte salt dissolved in the non-aqueous solvent. The non-aqueous solvent may be, for example, any of esters, ethers, nitriles, or amides, a composite solvent of two or more of them, and the like. The non-aqueous solvent may contain a halogenated compound made by replacing at least some of hydrogen atoms of the solvent with halogen atoms, such as fluorine. Examples of the non-aqueous solvent include ethylene carbonate (EC), ethyl methyl carbonate (EMC), dimethyl carbonate (DMC), a mixed solvent of them and the like. The electrolyte salt may be, for example, lithium salt, such as LiPF6. Note that the non-aqueous electrolyte may be gel electrolyte, solid electrolyte or the like instead of the electrolytic solution.

A positive electrode lead 415 that extends from the upper end of the electrode assembly 414 in the axial direction, and directly connects the positive electrode 411 included in the electrode assembly 414 and the current collector plate 432 of the sealing assembly 430 to each other, and an upper insulating plate 416 disposed between the electrode assembly 414 and the sealing assembly 430 are provided above the electrode assembly 414. Since the positive electrode lead 415 electrically connects the positive electrode 411 and the sealing assembly 430 to each other, the positive electrode cap 431 of the sealing assembly 430 functions as a positive electrode external terminal as a first external terminal. The upper insulating plate 416 prevents the positive electrode 411 and the positive electrode lead 415 from coming into contact with the outer can 420, and also prevents the positive electrode lead 415 from coming into contact with the negative electrode 412 of the electrode assembly 414.

A negative electrode lead that extends from the lower end of the electrode assembly 414 in the axial direction, and directly connects the negative electrode 412 included in the electrode assembly 414 and the bottom portion 420B of the outer can 420 to each other, and a lower insulating plate 417 disposed between the electrode assembly 414 and the bottom portion 420B of the outer can 420 are provided below the electrode assembly 414. Since the negative electrode lead electrically connects the negative electrode 412 and the outer can 420 to each other, and the outer can 420 is electrically connected to the negative electrode cap 421 described later, the negative electrode cap 421 functions as a negative electrode external terminal serving as a second external terminal.

The outer can 420 is a metal container that has a closed-bottom cylindrical shape with one end (upper end) in the axial direction being open. The outer can 420 is typically made of metal, with iron as the principal component, but may be made of metal, with aluminum or the like as the principal component, in a case where the positive electrode 411 is connected. The outer can 420 includes: a cylindrical portion 420A that is formed to have a cylindrical shape; the bottom portion 420B that has a circular shape in bottom view; a shoulder portion 420C that is formed to have a ring shape along the circumferential direction of the outer can 420 at the opening end of the cylindrical portion 420A; and a grooved portion 420D that is formed along the circumferential direction of the cylindrical portion 420A. The outer can 420 is provided with a negative electrode cap 421 serving as a second terminal.

The grooved portion 420D is formed adjacent to the opening of the outer can 420 at a position apart from the shoulder portion 420C by a predetermined length. The grooved portion 420D is a portion that is part of the cylindrical portion 420A projecting to the inside of the outer can 420, and is formed by applying a spinning process to the cylindrical portion 420A from the outside, for example. Note that at the position where the grooved portion 420D is formed, the outer can 420 has a reduced diameter, and a narrow-lined groove is formed in the outer-peripheral surface of the cylindrical portion 420A. Preferably, the grooved portion 420D has a substantially U-shaped section, and is formed to have a ring shape over the entire length in the circumferential direction of the cylindrical portion 420A.

The negative electrode cap 421 as the second terminal is connected to the negative electrode 412 via the outer can 420, and functions as a negative electrode external terminal. The negative electrode cap 421 is formed to have a ring shape in plan view (viewed from the axial direction), and to have an L-shaped section viewed from the circumferential direction. Note that the negative electrode cap 421 may have a partially missing shape, such as a C-shape, in plan view. The negative electrode cap 421 includes: an end wall 421A that faces the outer can 420 in the height direction (axial direction), and is in contact with an upper end surface of the shoulder portion 420C of the outer can 420; a side wall 421B that faces the outer can 420 in the radial direction, and is in contact with the upper end portion of the cylindrical portion 420A of the outer can 420; and a projection 421C that is formed to project upward at an inner peripheral end portion of the end wall 421A in the radial direction. Note that both the end wall 421A and the side wall 421B are not necessarily in contact with the outer can 420. The negative electrode cap 421 is welded to the cylindrical portion 420A of the outer can 420 at the predetermined position on the side wall 421B of the negative electrode cap 421, and is electrically connected to the outer can 420. Although the details are described later, a negative electrode current collector plate 442 is joined by welding to the end wall 421A. Accordingly, the negative electrode cap 421 and the negative electrode current collector plate 442 are electrically connected to each other.

The projection 421C of the negative electrode cap 421 constitutes an external short-circuit mechanism 450, which is described later in detail. The projection 421C is formed by bending the inner peripheral end portion of the end wall 421A of the negative electrode cap 421 upward. The projection 421C is formed to have a ring shape in plan view (viewed from the axial direction). The projection 21C is formed by applying a burring process to the inner peripheral end portion of the end wall 421A.

Note that the projection 421C is not necessarily at the inner peripheral end portion of the end wall 421A of the negative electrode cap 421. It may be only required to be inside the outer end of the outer can 420 at least at the end wall 421A of the negative electrode cap 421 in the radial direction of the power storage device 410. Consequently, it may be outside the inner peripheral end portion of the end wall 421A of the negative electrode cap 421. In this case, part of the end wall 421A where the projection 421C is formed may be formed as a thick wall, or have a caret shape, such as a V-shaped, C-shaped, or U-shaped section, protruding from the lower surface (the surface facing the outer can) of the end wall 421A to its upper surface (the surface on the outer side of the power storage device) formed by bending the plate-shaped end wall 421A. According to this configuration, the entire stiffness of the negative electrode cap 421 can be improved in comparison with the projection 421C at the inner peripheral end portion.

Furthermore, in particular, in a case where the negative electrode cap 421 is a metal plate with plated surfaces, the inner peripheral end portion in the radial direction and the like are not covered by plating in some cases, and the unplated inner peripheral end portion is prone to rust. Accordingly, by disposing the projection 421C outside the inner peripheral end portion, a plated rust-resistant area of the end wall 421A can be used as the projection 421C. The projection 421C does not necessarily have a ring shape, and may be intermittently provided in the circumferential direction of the end wall 421A.

Furthermore, in the circumferential direction of the end wall 421A, only one projection 421C may be provided. In the case where the projection 421C is intermittently provided, a through-hole may be formed in a top portion of the caret-shaped projection 421C. The caret-shaped projection 421C may be provided at the inner peripheral end portion of the end wall 421A. The upper end of the projection 421C may be positioned above the upper end of the positive electrode cap 431.

The sealing assembly 430 is formed to have a disk shape as a whole, and includes a positive electrode cap 431, a current collector plate 432, a gasket 433, and an insulating member 434. The sealing assembly 430 is disposed above the grooved portion 420D of the outer can 420, and is fixed to the upper end portion of the outer can 420. In more detail, the shoulder portion 420C of the outer can 420 is bent inward in the radial direction and swagged to the sealing assembly 430, the sealing assembly 430 is fixed to the upper end portion of the outer can 420 by the shoulder portion 420C and the grooved portion 420D of the outer can 420, and the sealing assembly 430 blocks the opening of the outer can 420.

The positive electrode cap 431 is connected to the positive electrode 411 via the positive electrode lead 415 and the current collector plate 432, and functions as a positive electrode external terminal. The positive electrode cap 431 is a disk-shaped metal member, and includes: an elevated portion 431A whose center portion in the radial direction protrudes to the outside of the power storage device 410; and a flange portion 431B formed around the elevated portion 431A. The positive electrode cap 431 is disposed on the upper surface side of the sealing assembly 430, and is exposed outside the outer can 420, thus forming a top surface of the power storage device 410. Although the details are described later, a positive electrode current collector plate 441 is joined by welding to the elevated portion 431A. Accordingly, electrical connection is made to the positive electrode current collector plate 441.

The current collector plate 432 is connected to the positive electrode 411 via the positive electrode lead 415, and functions as a positive electrode current collector plate. The current collector plate 432 is a metal member that has a diameter comparable to that of the positive electrode cap 431. The current collector plate 432 is formed to have a ring shape that has an opening at a center portion in the radial direction. The current collector plate 432 is disposed closer to the electrode assembly 414 than the positive electrode cap 431. The current collector plate 432 is welded to the positive electrode cap 431, and is thus welded, for example, at a position closer to the outer peripheral edge of the positive electrode cap 431 than its center in the radial direction.

The gasket 433 is a rubber member or a plastic member that prevents the positive electrode cap 431 and the current collector plate 432 from coming into contact with the outer can 420, and secures electrical insulation between the outer can 420 and the sealing assembly 430. The gasket 433 blocks the gap between the outer can 420 and the sealing assembly 430, and seals the inside of the power storage device 410. The gasket 433 is provided between the outer peripheral portion of the stacked body of the positive electrode cap 431 and the current collector plate 432, and the outer can 420. The gasket 433 covers the upper surface of the flange portion 431B of the positive electrode cap 431, the side surfaces of the positive electrode cap 431 and the current collector plate 432, and the lower surface of the current collector plate 432, at the outer peripheral portion of the stacked body.

The insulating member 434 is a rubber member or a plastic member for preventing contact between the positive electrode cap 431 and the negative electrode cap 421, and securing electric insulation between the positive electrode cap 431 and the negative electrode cap 421. The insulating member 434 is formed to have a ring shape that has an opening at a center portion in the radial direction. The insulating member 434 is disposed between the upper surface of the flange portion 431B of the positive electrode cap 431 and the lower surface of the end wall 421A of the negative electrode cap 421. Viewed from the axial direction, the insulating member 434 is disposed between the elevated portion 431A of the positive electrode cap 431 and the shoulder portion 420C of the outer can 420.

As described above, the positive electrode current collector plate 441 is joined by welding to the elevated portion 431A of the positive electrode cap 431. Accordingly, the positive electrode current collector plate 441 is electrically connected to the positive electrode cap 431. The positive electrode current collector plate 441 is a strip-like metal member with conductivity, and is provided above the positive electrode cap 431.

The negative electrode current collector plate 442 is joined by welding to the end wall 421A of the negative electrode cap 421. Accordingly, the negative electrode current collector plate 442 is electrically connected to the negative electrode cap 421. The negative electrode current collector plate 442 is a strip-like metal member with conductivity, and is provided above the negative electrode cap 421.

### [External Short-Circuit Mechanism]

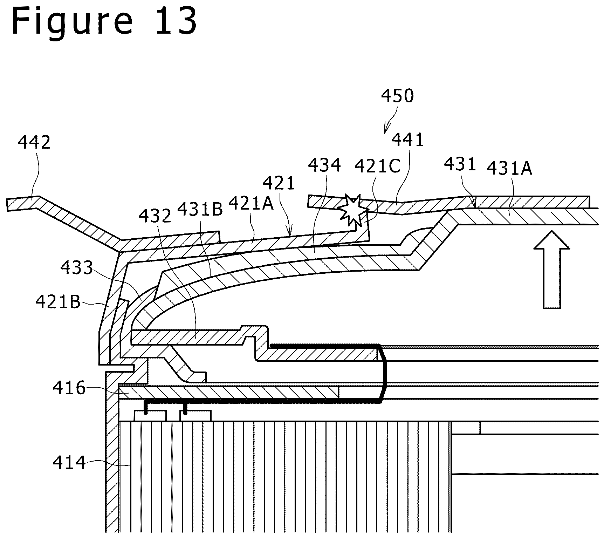

Referring to FIGS. 12 and 13, the external short-circuit mechanism 450 is described.

The external short-circuit mechanism 450 is a mechanism that short-circuits the power storage device 410 outside the outer can 420 by short-circuiting the positive electrode current collector plate 441 and the negative electrode cap 421, when the internal pressure of the power storage device 410 increases in case of an abnormality of the power storage device 410. Although the details are described later, by the external short-circuit mechanism 450, the safety of the power storage module 5 can be improved.

As shown in FIG. 12, the external short-circuit mechanism 450 includes the projection 421C of the negative electrode cap 421, and the positive electrode current collector plate 441. That is, the external short-circuit mechanism 450 is configured to be outside the outer can 420. Accordingly, when the power storage device 410 is short-circuited by the external short-circuit mechanism 450, the effect of short circuit on the potential and electrolyte in the power storage device 410 is mitigated.

As shown in FIG. 13, when the internal pressure of the power storage device 410 increases in case of an abnormality of the power storage device 410, the outer can 420 is expanded, and the negative electrode cap 421 is deformed upward in the axial direction. In this case, the projection 421C of the negative electrode cap 421 comes into contact with the positive electrode current collector plate 441, the negative electrode cap 421 and the positive electrode current collector plate 441 are electrically connected to each other, and the power storage device 410 is short-circuited.

By the external short-circuit mechanism 450, the safety of the power storage module 5 can be improved. In more detail, by the external short-circuit mechanism 450, the power storage device 410 is short-circuited outside the outer can 420. Accordingly, the power storage device 410 can be short-circuited without being affected by the electrolytic solution and the potential of the power storage device 410. Accordingly, current flows into the short-circuited power storage device 410 from another adjacent power storage device 410 connected in parallel to this short-circuited power storage device 410, and the amount of heat generation of the short-circuited power storage device 410 can be reduced.

Note that when the power storage device 410 is short-circuited by the external short-circuit mechanism 450 in case of an abnormality of the power storage device 410, a large current flows into a system to which the power storage module 5 is connected, and a fuse provided for the system is blown, thus preventing current from flowing into the short-circuited power storage device 410.

By the external short-circuit mechanism 450, the short-circuit mechanism can be achieved only by forming the projection 421C of the negative electrode cap 421, without using adhesive or a complicated mechanism, such as of a spring, in the power storage device 410.

Furthermore, by the external short-circuit mechanism 450, the short-circuit mechanism can be achieved without separately providing any member on the conductive path from the positive electrode 411 to the positive electrode cap 431 or the conductive path from the negative electrode 412 to the negative electrode cap 421. Accordingly, the short-circuit path can be achieved while maintaining the power storage device 410 at a low resistance.

### [Fifth Embodiment]

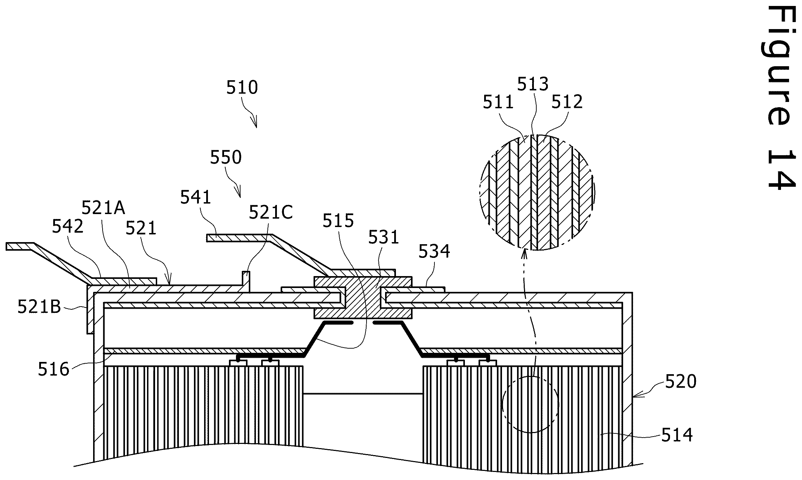

Referring to FIG. 14, an external short-circuit mechanism 550 of a power storage device 510 that is another example of a fifth embodiment is described. In the following, configurations different from those of the power storage device 410 and the external short-circuit mechanism 450 described above are described, and the description of configurations and advantageous effects similar to those of the power storage device 410 and the external short-circuit mechanism 450 described above is omitted.

The power storage device 510 includes: an electrode assembly 514 where a positive electrode 511 as a first polar plate and a negative electrode 512 as a second polar plate wound are wound with a strip-shaped separator 513 intervening therebetween; an electrolyte (not shown); an outer can 520 that houses the electrode assembly 514 and the electrolyte; and a negative electrode cap 521 as a second external terminal; and a rivet 531 as a first external terminal. Note that in the present embodiment, for example, the unillustrated other end of the outer can 520 is provided with an opening, and a lid for blocking the opening and this opening are joined by welding to each other, thus sealing the opening. The lid and the negative electrode 512 of the electrode assembly 514 are connected to each other.

The rivet 531 is fixed to the opening formed in an upper end surface of the outer can 520 in the axial direction via an insulating plate 534. A positive electrode lead 515 that extends from the upper end of the electrode assembly 514 in the axial direction, and directly connects the positive electrode 511 included in the electrode assembly 514 and the rivet 531 to each other, and an upper insulating plate 516 disposed between the electrode assembly 514 and the rivet 531 are provided above the electrode assembly 514.

A positive electrode current collector plate 541 is joined by welding to the rivet 531. Accordingly, the positive electrode current collector plate 541 is electrically connected to the rivet 531. The negative electrode current collector plate 542 is joined by welding to the negative electrode cap 521.

The external short-circuit mechanism 550 includes the projection 521C of the negative electrode cap 521, and the positive electrode current collector plate 541. When the internal pressure of the power storage device 510 increases in case of an abnormality of the power storage device 510, the outer can 520 is expanded, and the negative electrode cap 521 is deformed upward in the axial direction. In this case, the projection 521C of the negative electrode cap 521 comes into contact with the positive electrode current collector plate 541, the negative electrode cap 521 and the positive electrode current collector plate 541 are electrically connected to each other, and the power storage device 510 is short-circuited.

Note that the present disclosure is not limited to the aforementioned embodiments and their modified examples, and it is a matter of course that various change and improvement can be made in a range of the items described in the claims of the present application.

### REFERENCE SIGNS LIST

5 Power storage module, 10 Power storage device, 11 Positive electrode, 12 Negative electrode, 13 Separator, 14 Electrode assembly, 15 Positive electrode lead, 16 Upper insulating plate, 17 Lower insulating plate, 20 Outer can, 20A Cylindrical portion, 20B Bottom portion, 20C Shoulder portion, 20D Grooved portion, 21 Negative electrode cap, 21A End wall, 21B Side wall, 21C Projection, 30 Sealing assembly, 31 Positive electrode cap, 31A Elevated portion, 31B Flange portion, 31C Projection, 32 Current collector plate, 33 Gasket, 34 Insulating member, 41 Positive electrode current collector plate, 42 Negative electrode current collector plate, 43 Base member, 43A End surface, 50 External insulating mechanism, 60 External insulating mechanism, 210 Power storage device, 211 Positive electrode, 212 Negative electrode, 213 Separator, 214 Electrode assembly, 215 Positive electrode lead, 216 Upper insulating plate, 220 Outer can, 221 Negative electrode cap, 221A End wall, 221B Side wall, 221C Projection, 231 Rivet, 234 Insulating member, 241 Positive electrode current collector plate, 242 Negative electrode current collector plate, 250 External insulating mechanism, 310 Power storage device, 311 Positive electrode, 312 Negative electrode, 313 Separator, 314 Electrode assembly, 315 Positive electrode lead, 316 Upper insulating plate, 317 Lower insulating plate, 320 Outer can, 320A Cylindrical portion, 320B Bottom portion, 320C Shoulder portion, 320D Grooved portion, 321 Negative electrode cap, 321A End wall, 321B Side wall, 321C Projection, 330 Sealing assembly, 331 Positive electrode cap, 331A Elevated portion, 331B Flange portion, 331C Projection, 332 Current collector plate, 333 Gasket, 334 Insulating member, 334A Depression, 350 External short-circuit mechanism, 410 Power storage device, 411 Positive electrode, 412 Negative electrode, 413 Separator, 414 Electrode assembly, 415 Positive electrode lead, 416 Upper insulating plate, 417 Lower insulating plate, 420 Outer can, 420A Cylindrical portion, 420B Bottom portion, 420C Shoulder portion, 420D Grooved portion, 421 Negative electrode cap, 421A End wall, 421B Side wall, 421C Projection, 430 Sealing assembly, 431 Positive electrode cap, 431A Elevated portion, 431B Flange portion, 431C Projection, 432 Current collector plate, 433 Gasket, 434 Insulating member, 441 Positive electrode current collector plate, 442 Negative electrode current collector plate, 450 External short-circuit mechanism, 510 Power storage device, 511 Positive electrode, 512 Negative electrode, 513 Separator, 514 Electrode assembly, 515 Positive electrode lead, 516 Upper insulating plate, 520 Outer can, 521 Negative electrode cap, 521A End wall, 521B Side wall, 521C Projection, 531 Rivet, 534 Insulating member, 541 Positive electrode current collector plate, 542 Negative electrode current collector plate, 550 External short-circuit mechanism

## Claims

1. A power storage device, comprising:
an electrode assembly that includes a first electrode and a second electrode;
an outer can that accommodates the electrode assembly, and is electrically connected to the second electrode;
a first terminal that blocks an opening formed on one side of the outer can in an axial direction, and is electrically connected to the first electrode; and
a second terminal that is provided on the one side of the outer can in the axial direction, and is electrically connected to the outer can, the second terminal including a safety device provided with a projection.

2. The power storage device according to Claim 1, wherein
the second terminal is provided with the projection that projects toward a first current collector plate connected to the first terminal, and
the projection is provided with an insulating member that covers the projection.

3. The power storage device according to Claim 2, wherein
the second terminal is deformed upward in the axial direction by expansion of the outer can, the first current collector plate is pushed up by the insulating member, and connection between the first current collector plate and the first terminal is broken.

4. The power storage device according to Claim 2, wherein
the second terminal is deformed upward in the axial direction by expansion of the outer can, and the insulating member slides on an end surface of a base member provided above the first current collector plate, thus cutting the first current collector plate.

5. The power storage device according to any one of Claims 2 to 4, wherein
the projection is positioned inside an outer end of the outer can in a radial direction.

6. The power storage device according to any one of Claims 2 to 5, wherein
the projection is formed by bending an inner peripheral end portion of the second terminal upward.

7. The power storage device according to any one of Claims 2 to 6, wherein
the projection is formed in a ring shape in plan view.

8. A power storage module that includes the power storage devices according to any one of Claims 2 to 7, wherein
the power storage devices are configured to be connected in parallel and in series, and
the power storage module further includes the first current collector plate connected to the first terminals of the power storage devices.

9. A power storage module that includes the power storage devices according to any one of Claims 2 to 7, wherein
the power storage devices are configured to be connected in parallel and in series, and
the power storage module further includes:
the first current collector plate connected to the first terminals of the power storage devices; and
a base member provided above the first current collector plate.

10. The power storage device according to Claim 1, further comprising
an insulating member provided between the first terminal and the second terminal, wherein
the second terminal is provided with the projection that projects toward the first terminal.

11. The power storage device according to Claim 10, wherein
by expansion of the outer can, the first terminal is deformed toward the one side in the axial direction to bring the projection into contact with the first terminal.

12. The power storage device according to Claim 10 or 11, wherein
the projection is positioned inside an outer end of the outer can in a radial direction.

13. The power storage device according to any one of Claims 10 to 12, wherein
the projection is formed by bending an inner peripheral end portion of the second terminal.

14. The power storage device according to any one of Claims 10 to 13, wherein
the projection is formed in a ring shape in plan view.

15. The power storage device according to any one of Claims 10 to 14, wherein
the insulating member is provided with a depression to which the projection is fit.

16. The power storage device according to Claim 15, wherein
the depression is formed in a ring shape in plan view.

17. A power storage module that includes the power storage devices according to any one of Claims 10 to 16, wherein
the power storage devices are configured to be connected in parallel and in series.

18. The power storage device according to Claim 1, wherein
the second terminal is provided with the projection that projects toward a first current collector plate connected to the first terminal.

19. The power storage device according to Claim 18, wherein
by expansion of the outer can, the second terminal is deformed toward the one side in the axial direction to bring the projection into contact with the first current collector plate.

20. The power storage device according to Claim 18 or 19, wherein
the projection is positioned inside an outer end of the outer can in a radial direction.

21. The power storage device according to any one of Claims 18 to 20, wherein
the projection is formed by bending an inner peripheral end portion of the second terminal upward.

22. The power storage device according to any one of Claims 18 to 21, wherein
the projection is formed in a ring shape in plan view.

23. A power storage module that includes the power storage devices according to any one of Claims 18 to 22, wherein
the power storage devices are configured to be connected in parallel and in series, and
the power storage module further includes the first current collector plate connected to the first terminals of the power storage devices.
